## Europäisches Patentamt

## European Patent Office

## Office européen des brevets

(19)

(11) Veröffentlichungsnummer: **0 008 698**
**B1**

(12) **EUROPÄISCHE PATENTSCHRIFT**

(45) Veröffentlichungstag der Patentschrift:
24.03.82

(51) Int. Cl.³: **H 01 G 4/22**

(21) Anmeldenummer: **79102889.7**

(22) Anmeldetag: **09.08.79**

(54) **Imprägnierter elektrischer Kondensator.**

(30) Priorität: **06.09.78 DE 2838831**

(43) Veröffentlichungstag der Anmeldung:
**19.03.80 Patentblatt 80/6**

(45) Bekanntmachung des Hinweises auf die Patenterteilung:
**24.03.82 Patentblatt 82/12**

(84) Benannte Vertragsstaaten:
**FR GB IT SE**

(56) Entgegenhaltungen:
**DE-A-2 704 458**

(73) Patentinhaber: **SIEMENS AKTIENGESELLSCHAFT Berlin und München, Postfach 22 02 61, D-8000 München 22 (DE)**

(72) Erfinder: **Rheindorf, Hans Heinz, Dipl.-Phys., Stettinerstrasse 33, D-7922 Herbrechtingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprägnierter elektrischer Kondensator

Die Erfindung betrifft einen elektrischen Kondensator, der wenigstens einen Wickel aus Dielektrikumsfolien aus Papier und/oder Kunststoff und metallische Beläge enthält, und bei dem der Wickel in einem Stromzuführungen enthaltenden, gasdicht verschlossenen, mit einem Überdrucksicherungssystem versehenen Metallbecher untergebracht ist, der mit einer dielektrischen, halogenfreien, nichtpolaren Imprägnierflüssigkeit, insbesondere mit Mineralöl, bis auf ein Puffervolumen gefüllt ist.

Bei derartigen Kondensatoren bestehen die metallischen Beläge beispielsweise entweder aus regenerierfähigen dünnen Metallisierungen, welche auf die Dielektrikumsfolien bzw. separate Trägerfolien aufgebracht sind oder aus Metallfolien, welche mit den Dielektrikumsfolien verwickelt sind. Als Überdrucksystem dient z.B. eine Abreisssicherung, welche aus einem gespannten Draht mit einer Sollbruchstelle besteht. Dieser Draht, der gleichzeitig als elektrische Zuführung zu einem Wickel dient, ist beispielsweise im Deckel des Kondensatorbechers befestigt. Bei Druckerhöhung im Innern des Kondensatorbechers überträgt sich dieser Druck in Form einer Zugkraft auf im Kondensatorbecher vorgesehene Sicken, wodurch der Abstand zwischen dem Becherboden und dem Becherdeckel vergrössert wird und damit zum Zerreissen des Drahtes führt.

Bei derartigen mit Öl imprägnierten Kondensatoren muss der Wickel vollständig imprägniert sein, um dort Teilentladungen zu unterbinden. Ausserhalb des Wickels wird im Gehäuse möglichst viel des vorhandenen Totraumes mit Öl ausgefüllt, damit der Wickel auch bei Lageänderung des Kondensators von Öl bedeckt bleibt. Wegen der unterschiedlichen Ausdehnungskoeffizienten des Imprägnieröles und der anderen Kondensatormaterialien ist jedoch in starren Metallbechern ein gasförmiges Puffervolumen notwendig, um die relativ grössere Volumenänderung des Imprägnieröles aufzufangen. Dieses Volumen ist im allgemeinen mit Luft gefüllt.

Im geschlossenen Metallbecher kann die Schwierigkeit auftreten, dass diese Luftmenge von dem vorher üblicherweise völlig getrockneten und entgasten Öl absorbiert wird und dadurch im Kondensatorbecher ein Unterdruck auftritt. Entsprechend dem Paschen-Gesetz, das eine verminderte Durchschlagsfestigkeit bei herabgesetztem Druck beschreibt, können deshalb bevorzugt Ionisationsvorgänge und Korona-Entladungen auftreten, die schliesslich zum Durchschlag führen können.

Um den durch die Absorption des Puffergases entstehenden Unterdruck zu vermeiden, werden derartige Kondensatoren deswegen nach dem Imprägnieren lange offengelassen bzw. mehrmals belüftet. Durch die Luftaufnahme des Imprägniermittels werden aber andererseits Korona-Entladungen im Wickel wieder begünstigt. Zum Beispiel kann bei stärkerer Abkühlung das schrumpfende Imprägniermittel nicht schnell genug von aussen in das Innere des Wickels nachfliessen, so dass im Wickel Spalten aufreissen, in die bevorzugt die absorbierte Luft diffundiert. In diesen Spalten entstehen bei anliegender Wechselspannung in bekannter Weise Korona-Entladungen, die das Dielektrikum angreifen und schliesslich zum Durchschlag und damit zur Zerstörung des Kondensators führen.

Aufgabe der Erfindung ist es, einen Kondensator der eingangs angegebenen Art anzugeben, bei welchem die genannten Schwierigkeiten nicht auftreten.

Diese Aufgabe wird erfindungsgemäss dadurch gelöst, dass die Imprägnierflüssigkeit mit einem elektronegativen Gas gesättigt ist und das Puffervolumen im Metallbecher ebenfalls mit diesem Gas in einer Menge gefüllt ist, die einen Druck gewährleistet, der höher als der Normaldruck, jedoch niedriger als der Ansprechdruck für das Sicherungssystem ist.

Gemäss einer Weiterbildung der Erfindung ist das elektronegative Gas Schwefelhexafluorid ($SF_6$).

Die Vorteile der Erfindung bestehen darin, dass durch die Verwendung eines elektronegativen Gases Korona-Entladungen im Wickel bei Druck- bzw. Temperaturänderungen weitestgehend vermieden werden.

Gemäss einer Weiterbildung der Erfindung ist an der Oberseite des Metallbechers zur Einstellung des Flüssigkeitsspiegels des Imprägniermittels ein Steigrohr und zur Gasbeladung des Metallbechers eine Anschluss-Ventil-Kombination, die die eingefüllte Gasmenge auch bei Überdruck im Kondensator zurückhält, angeordnet, wobei das Steigrohr und die Anschluss-Ventil-Kombination nach der vollständigen Imprägnierung und Beladung des Kondensators mit dem elektronegativen Gas durch Löten, Schweissen oder Kleben verschlossen sind.

Damit wird der Vorteil erzielt, dass die Gasbeladung bei erhöhtem Druck durchgeführt werden kann, wodurch die Imprägnierung des Wickels beschleunigt wird.

Der Kondensator kann, nachdem das Puffervolumen mit der nötigen Gasmenge bzw. dem entsprechenden Druck beladen ist, unmittelbar anschliessend verschlossen und weiter gefertigt werden, während im Innern des Gehäuses der Imprägnier- und Absorptions-Prozess noch abläuft.

Weitere Vorteile der Erfindung werden anhand der im folgenden geschilderten Ausführungsbeispiele beschrieben. In der dazugehörenden Zeichnung zeigen

Fig. 1 einen in ein Gehäuse mit Dehnungssicken eingebauten Kondensator,

Fig. 2 einen in ein Gehäuse mit beweglichem Boden eingebauten Kondensator,

Fig. 3 eine im Boden bzw. Deckel des Gehäuses angeordnete Anschluss-Ventil-Kombination.

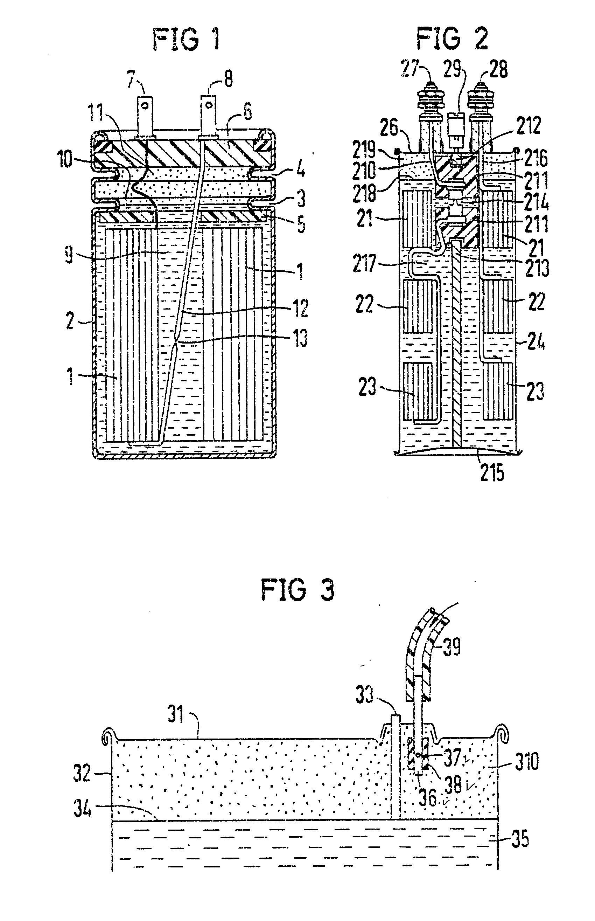

In Fig. 1 ist ein Kondensatorwickel 1 dargestellt, welcher in einen gasdicht verschlossenen Metallbecher 2 eingebaut ist. Der Wickel 1 ist im Becher 2 durch eine Haltescheibe 5 und die gestauchte Sicke 3 fixiert. Der Deckel 6 liegt auf einer weiteren gestauchten Sicke 4 und weist zwei äussere Anschlüsse 7, 8 als elektrische Zuführungen zum Wickel 1 auf. Der Becher 2 ist mit der Imprägnierflüssigkeit 9 gefüllt, wobei zwischen der Oberfläche der Flüssigkeit 10 und der Unterkante des Deckels 6 ein Puffervolumen vorhanden ist, welches mit dem elektronegativen Gas 11 gefüllt ist. Die eine elektrische Zuleitung 12 für den Kondensatorwickel 1 ist als Abreisssicherung mit Sollbruchstelle 13 ausgebildet. Bei unzulässiger Druckerhöhung im Innern des Kondensatorbechers 2 werden die Sicken 3, 4 aufgebogen, wodurch die als Abreisssicherung dienende elektrische Zuführung 12 an der Sollbruchstelle 13 durchtrennt wird; hierdurch wird der Kondensator abgeschaltet, ohne dass die Gefahr besteht, dass der Kondensatorbecher zerplatzt.

In Fig. 2 ist ein Kondensator dargestellt, bei welchem drei Wickel 21, 22, 23 in einem gasdicht verschlossenen Metallbecher 24 angeordnet sind. Im Deckel 26 sind die äusseren elektrischen Anschlüsse 27, 28 für die Wickel 21 bis 23 sowie der Becheranschluss 29 angeordnet. Vom Anschluss 27 führt eine gesicherte Zuleitung 210 zu den Wickeln 21 bis 23. In dieser Zuleitung 210 ist eine Abreisssicherung angeordnet. Diese Abreisssicherung besteht aus einer isolierenden Spannvorrichtung 211, welche zwischen einem oberen Spannband 212 und einem unteren Spannband 213 eingespannt ist. In der Spannvorrichtung 211 befindet sich eine Sollbruchstelle 214 der elektrischen Zuleitung 210. Das untere Spannband 213 ist am Becherboden 215 befestigt. Der Becherboden 215 wirkt als Arbeitsmembran, welche bei entstehendem Überdruck im Becher 24 eine Zugbeanspruchung über die Spannbänder 212 bzw. 213 auf die Spannvorrichtung 211 ausübt, so dass die elektrische Zuleitung 210 an der Sollbruchstelle 214 durchtrennt wird. Hierdurch wird ein sicheres Abschalten gewährleistet, so dass der Becher 24 nicht zerplatzen kann. Der zweite elektrische Anschluss der Wickel 21 bis 23 führt vom äusseren Anschluss 28 über die ungesicherte elektrische Zuleitung 216 zu den Wickeln 21 bis 23. Das Gehäuse 24 ist mit der Imprägnierflüssigkeit 217 gefüllt, wobei sich oberhalb des Flüssigkeitsspiegels 218 ein Puffervolumen befindet, welches mit einem elektronegativen Gas 219 gefüllt ist.

In Fig. 3 ist beispielhaft eine Anschluss-Ventil-Kombination dargestellt, welche zum Einfüllen des Gases und zum Einstellen eines bestimmten Flüssigkeitsspiegels verwendet wird. Im Deckel (bzw. Boden) 31 des Kondensatorbechers 32 ist ein Rohr 33 angeordnet, dessen inneres Ende den Spiegel 34 der Imprägnierflüssigkeit 35 bestimmt. Ein zweites Rohr 36 ist als Ventil ausgebildet, dessen Ventilöffnung 37 mit einem elastischen Schlauch 38 verschlossen ist. Auf der Aussenseite des Rohres 26 ist ein Schlauch 39 befestigt, welcher als Zuführung für das elektronegative Gas 310 dient. Der Becher 32 ist zunächst randvoll mit der Imprägnierflüssigkeit 35 gefüllt. Wenn das elektronegative Gas 310 unter Druck in den Becher 32 einströmt, wird zunächst so viel Imprägnierflüssigkeit 35 herausgedrückt, bis der durch das Steigrohr 33 vorbestimmte Flüssigkeitsspiegel 34 erreicht ist. Dann wird das Rohr 33 z.B. durch Löten, Schweissen oder Kleben verschlossen. Danach baut sich im Innern des Kondensatorbechers 32 durch weiteres Zuströmen des elektronegativen Gases 310 ein Überdruck auf.

Dieser Überdruck wird dadurch gewährleistet, dass zwar das Gas 310 durch die Ventilöffnungen 37 unter Druck ins Innere des Kondensatorbechers 32 eingeführt werden kann, dass aber andererseits das Gas 310 durch den elastischen Schlauch 38 am Ausströmen verhindert wird. Durch den Überdruck im Inneren des Bechers 32 wird erreicht, dass die Imprägnierflüssigkeit 35 das elektronegative Gas 310 absorbiert. Durch die dargestellte Anschluss-Ventil-Kombination wird eine Beschleunigung des Fertigungsverfahrens erreicht, weil der Absorptionsvorgang des Gases 310 in der Flüssigkeit 35 von alleine abläuft, wenn das Gas 310 nur mit einem entsprechenden Überdruck ins Gehäuse 32 eingefüllt ist. Selbstverständlich kann das Ventil auch von jeder anderen Form sein, die den Zufluss des Beladungsgases zu steuern gestattet, wie auch der Füllstand des Imprägniermittels durch andere Massnahmen eingestellt werden kann.

Bei einer bevorzugten Ausführungsform ist der Kondensatorwickel aus Dielektrikumfolien aus Polypropylen aufgebaut.

Als Beläge sind beidseitig mit regenerierfähig dünnen Metallisierungen versehene Papierbänder mitverwickelt, wobei die Metallisierungen auf den Papierbändern miteinander elektrisch leitend verbunden sind, so dass sich die Papierbänder im feldfreien Raum befinden. Die Imprägnierflüssigkeit besteht dabei aus einem Isolieröl, welches aromatische Anteile, die insbesondere Wasserstoff binden können, naphthenische Anteile und paraffinische Anteile enthält. Die Dielektrikumsfolien werden dabei von der Imprägnierflüssigkeit derart aufgequollen, dass zwischen den Belägen ein homogenes Dielektrikum vorhanden ist.

Bei einer anderen Ausführungsform bestehen die Dielektrikumsfolien aus Papeir, auf welches die Beläge als regenerierfähig dünne Metallisierungen aufgedampft sind.

**Patentansprüche**

1. Elektrischer Kondensator, der wenigstens einen Wickel aus Dielektrikumsfolien aus Papier und/oder Kunststoff und metallische Beläge enthält und bei dem der Wickel in einem Stromzuführungen enthaltenden, gasdicht verschlossenen, mit einem Überdrucksicherungssystem versehenen Metallbecher untergebracht ist, der mit einer dielektrischen, halogenfreien, nichtpolaren Imprägnierflüssigkeit, insbesondere mit Mineralöl, bis auf ein Puffervolumen, gefüllt ist, dadurch gekennzeichnet, dass die Imprägnierflüssigkeit mit einem elektronegativen Gas gesättigt ist und das Puffervolumen im Metallbecher ebenfalls mit diesem Gas in einer Menge gefüllt ist, die einen Druck gewährleistet, der höher als der Normaldruck, jedoch niedriger als der Ansprechdruck für das Sicherungssystem ist.

2. Elektrischer Kondensator nach Anspruch 1, dadurch gekennzeichnet, dass das elektronegative Gas Schwefelhexafluorid ($SF_6$) ist.

3. Elektrischer Kondensator nach Anspruch 1 oder 2, dadurch gekennzeichnet, dass an der Oberseite des Metallbechers (32) zur Einstellung des Flüssigkeitsspiegels (34) dès Imprägniermittels ein Steigrohr (33) und zur Gasbeladung des Metallbechers (32) eine Anschluss-Ventil-Kombination (36), die die eingefüllte Gasmenge auch bei Überdruck im Kondensator zurückhält, angebracht sind, wobei das Steigrohr (33) und die Anschluss-Ventil-Kombination (36) nach der vollständigen Imprägnierung und Beladung des Kondensators mit dem elektronegativen Gas (310) durch Löten, Schweissen oder Kleben verschlossen sind.

## Claims

1. An electrical capacitor which contains at least one roll consisting of dielectric foils made of paper and/or synthetic resin, and metallic coatings and in which the roll is accommodated in a metal cup containing current supply leads, which is sealed in gastight fashion and is provided with an excess pressure safety system and filled (with the exception of a buffer space) with a dielectric, halogen-free, non-polar impregnating liquid, in particular with mineral oil, characterised in that the impregnating liquid is saturated with an electronegative gas and the buffer space in the metal cup is also filled with this gas to an extent such that a pressure is ensured wich is higher than normal pressure, but lower than the actuating pressure for the safety system.

2. An electrical capacitor as claimed in claim 1, characterised in that the electronegative gas is sulphur hexafluoride ($SF_6$).

3. An electrical capacitor as claimed in claim 1 or claim 2, characterised in that there are mounted on the upper side of the metal cup (32), a vertical pipe (33) which serves to adjust the liquid level (34) of the impregnating agent, and a connection-valve combination (36) which serves to fill the metal cup (32) with gas and to retain the amount of filled gas in the capacitor, even on the occurrence of excess pressure, the vertical pipe (33) and the connection-valve combination (36) are sealed by soldering, welding, or sticking after the complete impregnation and filling of the capacitor with the electronegative gas (310).

## Revendications

1. Condensateur électrique comportant au moins une bobine en une feuille diélectrique en papier et/ou en matière synthétique, ainsi que des revêtements métalliques, dans lequel la bobine est logée dans une enveloppe métallique pourvue de bornes d'alimentation en courant, fermée de façon étanche aux gaz et d'un système de sécurité contre des surpressions, ladite enveloppe étant remplie, à l'exception d'un volume tampon, avec un liquide d'imprégnation non polaire, diélectrique et libre d'halogénure, en particulier avec une huile minerale, caractérisé par le fait que d'imprégnation est saturé avec un gaz électronégatif et que le volume tampon dans l'enveloppe est également rempli avec ce gaz à une quantité qui assure une pression qui es supérieure à la pression normale, mais inférieure à la pression de réponse du système de sécurité.

2. Condensateur électrique selon la revendication 1, caractérisé par le fait que le gaz électronégatif est l'hexafluorure ($SF_6$).

3. Condensateur électrique selon la revendication 1 ou 2, caractérisé par le fait que dans le côté supérieur de l'enveloppe (32) sont fixés un tuyau de montée (33) pour ajuster le niveau de liquide (34) du produit d'imprégnation et pour la décharge du gaz de l'enveloppe (32) un système de soupape et de raccordement (36) qui retient la quantité gazeuse introduite même en cas de surpression dans le condensateur, le tuyau de montée (33) et le système de soupape et de raccordement (36) étant fermés par soudure, par brasure ou collage après imprägnation et charge du condensateur avec le gaz électronégatif (310).

## FIG 1

## FIG 2

## FIG 3